# EUROPEAN PATENT SPECIFICATION

(11) **EP 2 584 165 B1**
(45) Date of publication and mention of the grant of the patent: **25.03.2015**
(21) Application number: 12790200.5
(22) Date of filing: 09.05.2012
(51) Int. Cl.: F02B 61/02, F16H 7/08, F01L 1/02

(54) **ENGINE AND SADDLE-TYPE VEHICLE**
MOTOR UND SATTELFAHRZEUG
MOTEUR, ET VEHICULE A SELLE

(30) Priority: 20.05.2011 JP 2011114093
(43) Date of publication of application: 24.04.2013
(73) Proprietor: Yamaha Hatsudoki Kabushiki Kaisha, Iwata-shi, Shizuoka 438-8501 (JP)
(72) Inventor: INOMORI, Toshinori, Iwata-shi Shizuoka 438-8501 (JP); NAKAJIMA, Akitoshi, Iwata-shi Shizuoka 438-8501 (JP)
(74) Representative: Grünecker, Kinkeldey, Stockmair & Schwanhäusser
(86) International application number: PCT/JP2012/061870
(87) International publication number: WO 2012/160973

(56) References cited:
- DE-A1- 19 758 116
- GB-A- 2 143 926
- JP-A- 11 108 135
- JP-A- 2011 064 259
- US-A- 4 825 818
- US-A1- 2004 069 260

## Description

The present invention relates to an engine according to the preamble of independent claim 1, a method of attaching a chain to an engine having a chain room and a straddle type vehicle, and more particularly to an engine and a straddle type vehicle where a cam chain can be easily attached and detached. Such an engine can be taken from the prior art document US 2004/0069260 A1. Said engine comprises a side cover that covers a side of the chain room adjacent to the cylinder block and the crank case.

Motorcycles, which are a type of straddle type vehicles, are known. An engine included in a motorcycle is disclosed in JP 2009-228673 A, for example. In the engine of JP 2009-228673 A, motive power from the crankshaft is transmitted to the camshaft via a cam chain.

The cam chain is disposed in a chain room. The chain room is formed along a crankcase, cylinder body and cylinder head. The cam chain is tensioned so as not to go slack. The engine of JP 2009-228673 A includes a tensioner that presses a chain guide onto the cam chain. The tensioner tensions the cam chain.

The cam chain may be attached to the engine in the following way: with the cylinder body and cylinder head not being attached to the crankcase, the cam chain is wound around the sprocket attached to the crankshaft. Then, the cam chain guide is attached to the cylinder body before the cylinder body is attached to the crankcase. The cylinder head is attached to the cylinder body, and the cam chain is wound around the sprocket that is to be attached to the camshaft. The sprocket for the camshaft is fixed onto the camshaft. Finally, the tensioner is attached to the cylinder head to tension the cam chain.

The engine of JP 2009-228673 A includes a tensioner in addition to a cam chain guide, meaning a greater number of parts. To reduce the number of parts, a blade tensioner that serves as both a tensioner and a cam chain guide may be used. An example is described in US 2004/0069260 A. In such implementations, a blade tensioner is attached in a stage in which a cam chain guide would be attached. In such implementations, the blade tensioner already tensions the cam chain when the blade tensioner is attached. In such an arrangement, it is difficult to wind the cam chain around the sprocket for the camshaft due to the tension applied to the cam chain at this time.

Some cylinder bodies may have a side that can be opened and closed. If a cylinder body has a side that can be opened, this side of the cylinder body and cylinder head may be opened to support the blade tensioner such that the cam chain is not tensioned when the cam chain is attached, for example. However, most engines of straddle type vehicles include a cylinder body that does not have a side that can be opened. In such implementations, it is difficult to attach the cam chain, as discussed above.

An object of the present invention is to provide **an engine including a chain room as indicated above and a method of attaching a chain to an engine having a chain room with** an arrangement using a blade tensioner to tension the cam chain where the cam chain can be easily attached to an engine including a cylinder body.

**According to the present invention said object is solved by an engine including a chain room having the features of independent claim 1. Moreover, said object is also solved by a method of attaching a chain to an engine having a chain room having the features of independent claim 12. Preferred embodiments are laid down in the dependent claims.**

The engine according to an embodiment of the present invention is an engine including a chain room, including: a crankshaft; a camshaft; a first sprocket; a second sprocket; a crankcase; a cylinder body; a cylinder head; a chain; and a tensioning member. The first sprocket is attached to the crankshaft. The second sprocket is attached to the camshaft. The crankcase contains the first sprocket. The cylinder body is attached to the crankcase. The cylinder head is attached to the cylinder body and contains the second sprocket. The chain is wound around the first sprocket and the second sprocket. The tensioning member tensions the chain. The tensioning member includes a leaf spring and a contact member. The contact member supports the leaf spring and is contactable with the chain in the chain room. The crankcase, the cylinder body and the cylinder head form the chain room containing the chain. The cylinder body includes a cylindrical portion forming part of the chain room. The engine further includes a support shaft and a support member. The support shaft is inserted into a support hole formed in the tensioning member for swingably supporting the tensioning member on the cylinder head. The support member is contactable with a supported portion of the tensioning member to support the tensioning member. The support member is provided in the crankcase. The support member is configured to support the tensioning member in such a way that the supported portion is slidable.

In the engine of an embodiment of the present invention, a support shaft is provided for swingably supporting the tensioning member on the cylinder head and the supported portion is provided in the crankcase such that the supported portion can be moved to a location where it does not prevent a worker from attaching the chain. Thus, the supported portion of the tensioning member does not prevent the worker from attaching the chain, making it easier to attach the chain. Even if the engine includes a cylinder body that does not have a side that can be opened, the chain can be easily attached to the engine since the tensioning member can be handled at the crankcase.

### BRIEF DESCRIPTION OF THE DRAWINGS

[FIG. 1] FIG. 1 illustrates an entire motorcycle according to an embodiment of the present invention.
[FIG. 2] FIG. 2 illustrates the power unit of the motorcycle shown in FIG. 1.
[FIG. 3] FIG. 3 illustrates part of the transmission and other components located in the crankcase.
[FIG. 4] FIG. 4 illustrates the power transmitting mechanism.
[FIG. 5] FIG. 5 illustrates the power transmitting mechanism as viewed in a direction of the axis of the crankshaft.
[FIG. 6] FIG. 6 is a cross-sectional view of some of the components shown in FIG. 5, as viewed from above.

Now, a motorcycle 10 according to an embodiment of the present invention will be described with reference to the drawings. The present embodiment illustrates the motorcycle 10 as a scooter-type motorcycle. The same or corresponding parts in the drawings are labeled with the same numerals and their description will not be repeated.

### <Overall Configuration>

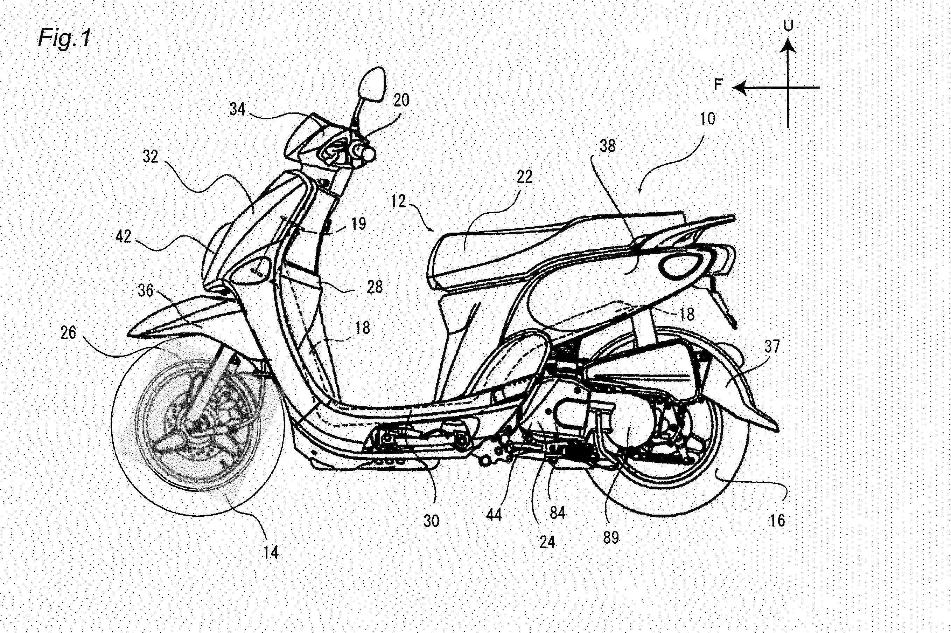

FIG. 1 is a left side view of the motorcycle 10 according to an embodiment of the present invention. In the following description, the directions "front/forward", "rear(ward)", "left" and "right" mean directions as perceived by a rider sitting on the seat 22 of the motorcycle 10. In some drawings, arrow "F" indicates the forward direction with respect to the motorcycle 10, and arrow "U" indicates the upward direction with respect to the motorcycle 10.

The motorcycle 10 includes a vehicle body 12, a front wheel 14 provided in a front portion of the motorcycle 10, and a rear wheel 16 provided in a rear portion of the motorcycle 10.

The vehicle body 12 generally includes a vehicle body frame 18, handlebars 20, a seat 22 and a power unit 24.

The body frame 18 supports the power unit 24 and seat 22. In FIG. 1, the body frame 18 is shown in broken lines. The body frame 18 includes a head pipe 19. A steering shaft is rotatably inserted into the head pipe 19. The handlebars 20 are attached to the top end of the steering shaft. A front fork 26 is attached to the both sides of the steering shaft. The front wheel 14 is rotatably attached to bottom end of the front fork 26. The body frame 18 is made of a rigid metal such as steel.

The body frame 18 is covered with a vehicle body cover 28. The body cover 28 is made of resin. The body cover 28 includes a footboard 30, front cover 32, handle cover 34, front fender 36, rear fender 37 and side covers 38.

The footboard 30 is provided below the seat 22. The footboard 30 extends in a front-to-rear direction.

The front cover 32 is located forward of the seat 22. The front cover 32 covers the head pipe 19. A headlight 42 is located on the front cover 32.

The handle cover 34 covers part of the handlebars 20. The handle cover 34 is provided above the front cover 32. A panel that displays measuring instruments such as a speedometer, not shown, is attached to the handle cover 34.

The front fender 36 is located above the front wheel 14. The front fender 36 is located below the front cover 32. The front fender 36 projects forward from the front cover 32.

The side covers 38 are provided below the seat 22. The side covers 38 are located above the rear wheel 16. The rear fender 37 is located below the side covers 38 and above the rear wheel 16. The side covers 38 extend rearward from below the seat 22.

The handlebars 20 are located forward of a rider sitting on the seat 22. The handlebars 20 extend to the left and right. A grip that can be grasped by the rider is located on each end of the handlebars 20.

The seat 22 is located above the power unit 24. A storage space that can store an object, such as a helmet, is provided below the seat 22.

The power unit 24 is located in the vicinity of the rear wheel 16. The power unit 24 is supported by the body frame 18, the power unit being swingable in a top-to-bottom direction with respect to the body frame. An engine 44, crankcase 84 and transmission case 89, included in the power unit 24, are not covered with the body cover 28. Details of the power unit 24 will be described below.

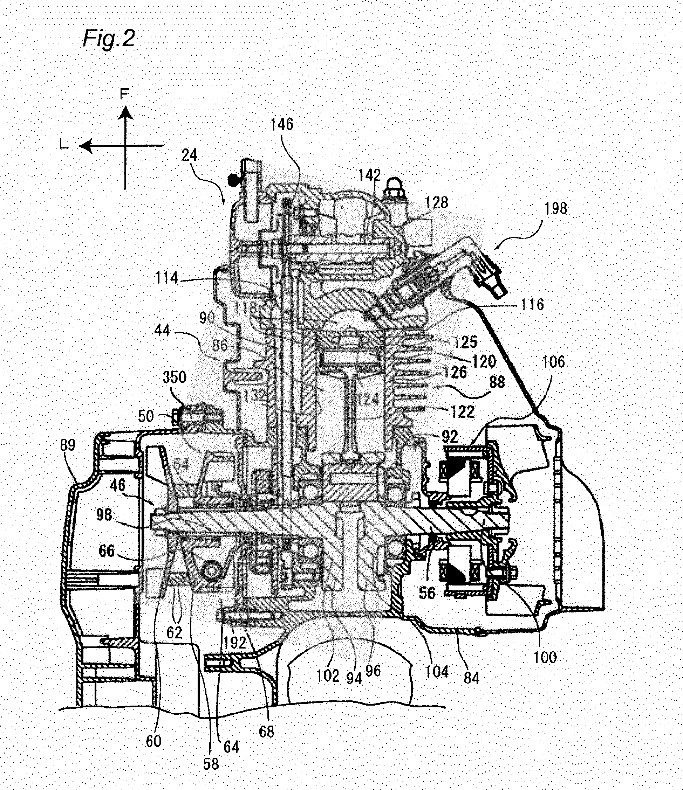

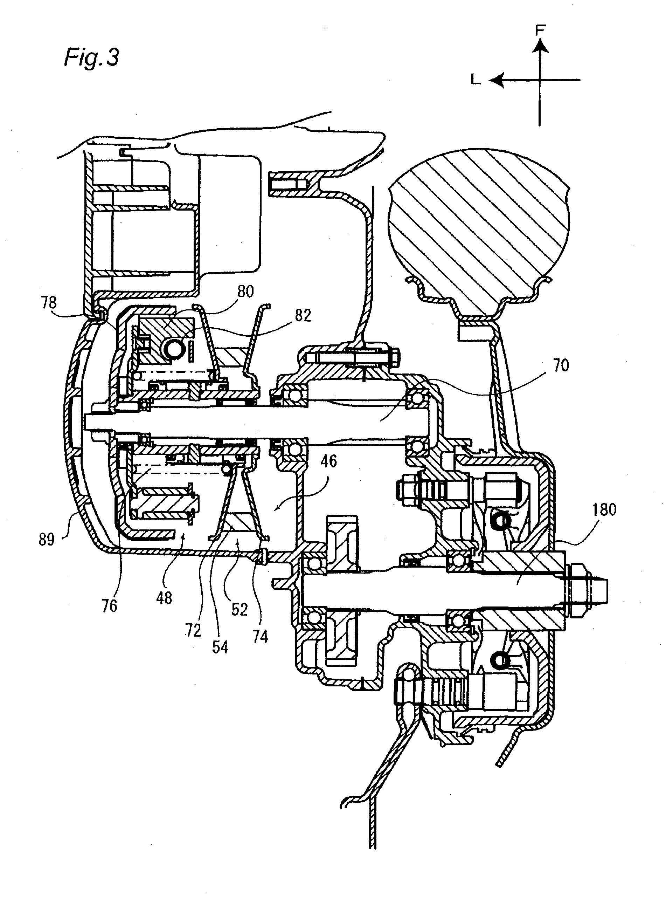

Next, the power unit 24 will be described with reference to FIGS. 2 and 3. FIG. 2 is a cross-sectional view of the engine 44 and crankcase 84 of the power unit 24. FIG. 3 is a cross-sectional view of part of the transmission 46 of the power unit 24. FIG. 3 shows components located rearward of those of FIG. 2. In FIGS. 2 and 3, arrow "F" indicates the forward direction with respect to the vehicle, and arrow "L" indicates the left direction with respect to the vehicle.

The power unit 24 is a swingarm-type power unit. The power unit 24 generally includes an engine 44 (FIG. 2), a transmission 46 (FIGS. 2 and 3) located to the left of the engine 44 and a centrifugal clutch 48 (FIG. 3) located to the left of the transmission 46.

The transmission 46 is a continuously variable transmission using a V-belt 54. The transmission 46 includes a driving pulley 50, a driven pulley 52 and the V-belt 54.

As shown in FIG. 2, the driving pulley 50 is attached to the left end of the crankshaft 56 in the engine 44. The driving pulley 50 includes a first driving pulley portion 58 and second driving pulley portion 60. The first driving pulley portion 58 is located opposite the second driving pulley portion 60. The second driving pulley portion 60 is located to the left of the first driving pulley portion 58. Each of the first and second driving pulley portions 58 and 60 has a sloping surface 62, the sloping surfaces being gradually separated from each other as they go toward their peripheries. A distance control mechanism 64 for controlling the distance between the first and second driving pulley portions 58 and 60 is provided for the driving pulley 50.

The distance control mechanism 64 includes a plurality of weight rollers 66 and a disk member 68 provided to the right of the first driving pulley portion 58. The disk member 68 is made of a rigid material. As the weight rollers 66 move toward the periphery of the pulley, the weight rollers 66 move the first driving pulley portion 58 toward the second driving pulley portion 60.

The driven pulley 52 will be described with reference to FIG. 3. FIG. 3 illustrates the centrifugal clutch 48 and part of the transmission 46.

Power is transmitted from the driving pulley 50 to the driven pulley 52 such that the driven pulley is rotated. The driven pulley 52 is attached to a first output shaft 70 positioned parallel to the crankshaft 56. The driven pulley 52 includes a first driven pulley portion 72 and a second driven pulley portion 74 located to the right of the first driven pulley portion 72. A spring 76 supported by a plate of the centrifugal clutch 48 applies a force to the first driven pulley portion 72 toward the right in FIG. 3 such that the first driven pulley portion approaches the second driven pulley portion 74.

The V-belt 54 transmits power from the driving pulley 50 to the driven pulley 52. The V-belt 54 wrapped around the driving pulley 50 and the driven pulley 52. More particularly, the V-belt 54 is sandwiched by the first and second driving pulley portions 58 and 60 and sandwiched by the first and second driven pulley portions 72 and 74.

The centrifugal clutch 48 is connected with the left side of the driven pulley 52 of the transmission 46. The centrifugal clutch 48 is provided on one end of the first output shaft 70. The centrifugal clutch 48 generally includes a clutch housing 78, clutch shoe 80 and clutch spring 82. As the rotational rate of the driving pulley 50 increases, the rotational rate of the clutch shoe 80 increases, as well. The clutch shoe 80 is pressed against the clutch housing 78 by a centrifugal force such that the torque of the clutch shoe 80 is transmitted to the clutch housing 78. The power transmitted to the clutch housing 78 is transmitted to the first output shaft 70 connected with the clutch housing 78.

A second output shaft 180, to which the rear wheel 16 is connected, is located rearward of the first output shaft 70. Power can be transmitted between the first and second output shafts 70 and 180 via gears, not shown.

### <Engine>

Next, the engine 44 will be described in detail, mainly with reference to FIG. 2.

The engine 44 generates motive power for the motorcycle 10. The engine 44 is an air-cooled engine. The engine 44 generally includes a crankshaft 56, crankcase 84, cylinder 88, piston 86 and power transmitting mechanism 90. The piston 86 is located forward of the crankshaft 56. The power transmitting mechanism 90 is located to the left of the piston 86.

Power is transmitted from the piston 86 to the crankshaft 56 such that the crankshaft rotates. The crankshaft 56 generally includes a crankpin 92, first crank web 94, second crank web 96, first crankshaft portion 98 and second crankshaft portion 100.

The crankpin 92 connects the crankshaft 56 with a connecting rod 122 of the piston 86.

The first crank web 94 supports the crankpin 92. A weight 102 is provided on the first crank web 94 for reducing inertia generated by vibrations of the piston 86 and connecting rod 122. The first crank web 94 is plate-shaped.

The second crank web 96 supports the crankpin 92. The second crank web 96 is located opposite the first crank web 94. A weight 104 is provided on the second crank web 96 for reducing inertia generated by vibrations of the piston 86 and connecting rod 122. The second crank web 96 is plate-shaped.

The first crankshaft portion 98 is connected with the first crank web 94. The first crankshaft portion 98 extends from the first crank web 94 in a direction generally perpendicular thereto. The driving pulley 50 of the transmission 46 is provided on an end of the first crankshaft portion 98.

The second crankshaft portion 100 is connected with the second crank web 96. The second crankshaft portion 100 extends from the second crank web 96 in a direction generally perpendicular thereto. A generator 106 is provided on an end of the second crankshaft portion 100. The generator 106 generates electric power.

The crankcase 84 supports the crankshaft 56 via bearings. A transmission case 89 is located rearward of the crankcase 84. The transmission 46 and other components are contained in the transmission case 89. The crankcase 84 is connected with the transmission case 89 by means of a bolt 350.

The cylinder 88 guides the piston 86 such that the piston reciprocates in a rectilinear manner. The cylinder 88 includes a cylinder body 126 and cylinder head 128.

A cylinder bore 132 having a circular cross-section is provided in the cylinder body 126. The piston 86 is located in the cylinder bore 132 of the cylinder body 126. The cylinder bore 132 guides the direction of travel of the piston 86. The cylinder body 126 is attached to the crankcase 84.

The cylinder head 128 is attached to the cylinder body 126. More particularly, the cylinder head 128 is located on the end of the cylinder body 126 opposite that with the crankcase 84. The cylinder head 128 has walls which define a combustion chamber 114, which is in communication with the cylinder bore 132 of the cylinder body 126. The combustion chamber 114 has a plurality of holes (not shown) that are in communication with the outside of the combustion chamber 114. Valves, not shown, are provided in these holes and can be driven when air is to be taken into, and discharged from, the combustion chamber 114. A fuel supply device, not shown, is attached to the combustion chamber 114 for supplying fuel. An ignition device 198 is attached to the cylinder head 128 for igniting mixed air in the combustion chamber 114. A camshaft 142 is located on the cylinder head 128 for driving the valves on the combustion chamber 114.

The piston 86, together with the cylinder head 128 of the engine 44, defines the combustion chamber 114. The piston 86 receives pressure from combustion gas in the combustion chamber 114 to rotate the crankshaft 56. The piston 86 is attached to the crankshaft 56. The piston 86 includes a piston head 116, piston rings 118, piston pin 120 and connecting rod 122.

The piston head 116 includes a disk-shaped end face 124 and a cylindrical portion 125 extending rearward from the periphery of the end face 124, perpendicularly thereto. A piston boss, into which the piston pin 120 can be inserted, is formed on a side of the piston head 116. Three ring grooves, into which the piston rings 118 can be inserted, are formed on the piston head 116, forward of the piston boss. Valve recesses are formed on the end face 124 of the piston head 116.

The piston rings 118 include two compression rings and an oil ring. The compression rings are inserted into the two of the ring grooves that are closer to the end face 124. The oil ring prevents mixed air and/or combustion gas from leaking out of the gap between the piston 86 and the cylinder body 126 of the cylinder 88. The oil ring scrapes oil off the guide wall of the cylinder body 126.

The piston pin 120 is inserted into the piston boss of the piston head 116 and connects the connecting rod 122 with the piston head 116.

The connecting rod 122 transmits motion of the piston head 116 to the crankshaft 56. The connecting rod 122 is connected with the piston head 116 and crankshaft 56. Each end of the connecting rod 122 has a cylindrical hole, into which the crankpin 92 or piston pin 120 can be inserted.

The power transmitting mechanism 90 transmits power from the crankshaft 56 to the camshaft 142 to drive the valves on the combustion chamber 114. Details of the power transmitting mechanism 90 will be described below.

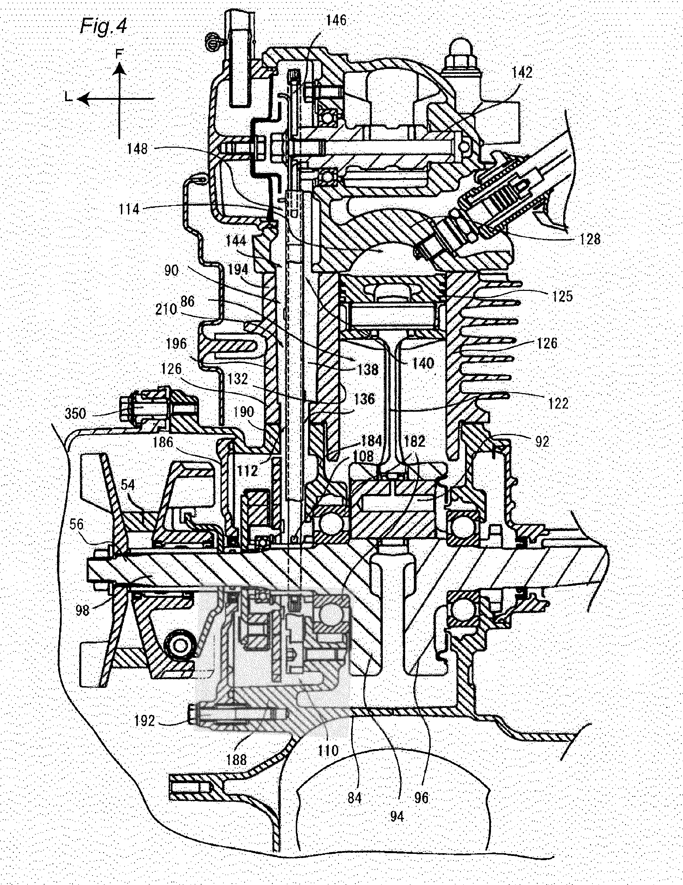

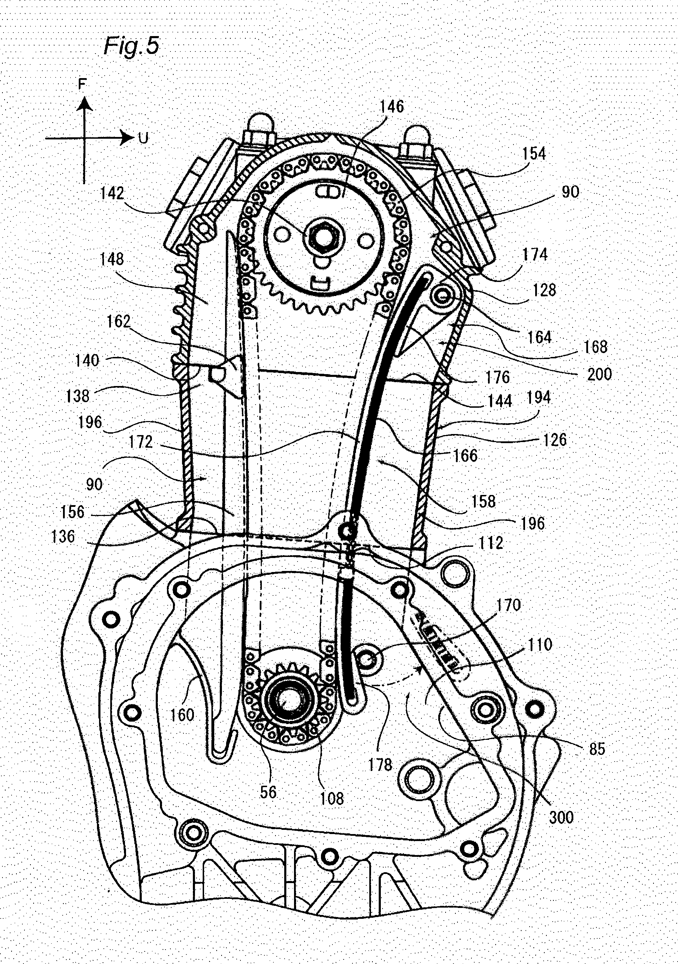

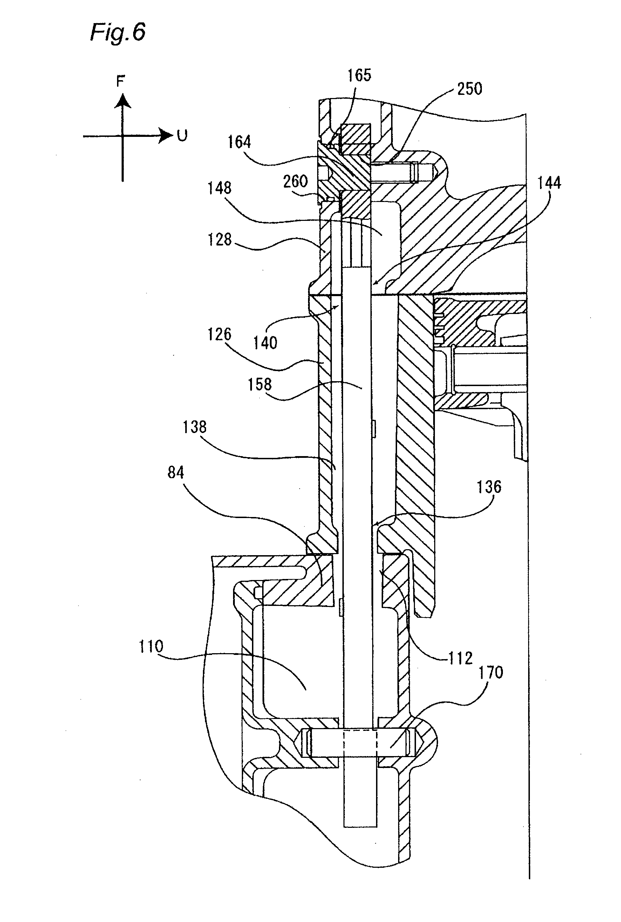

The power transmitting mechanism 90 will be described with reference to FIGS. 4, 5 and 6. FIG. 4 is an enlarged cross-sectional view of some of the components shown in FIG. 2, as viewed from above. FIG. 5 is a cross-sectional view of the chain room 210 of FIG. 4 as viewed from the left. FIG. 6 is a cross-sectional view of some of the components shown in FIG. 5, as viewed from above. In FIG. 5, arrow "F" indicates the forward direction with respect to the vehicle, and arrow "U" indicates the upward direction with respect to the vehicle.

As shown in FIGS. 4 and 5, the power transmitting mechanism 90 includes a chain room 210, first sprocket 108, second sprocket 146, cam chain 154, chain guide 156, tensioner 158 and support pin 170.

The chain room 210 is provided to the left of the piston 86. The chain room 210 contains the first sprocket 108, second sprocket 146, cam chain 154, chain guide 156, tensioner 158 and support pin 170. The chain room 210 includes a first subroom 110 provided in the crankcase 84, a second subroom 138 provided in the cylinder body 126 and a third subroom 148 provided in the cylinder head 128.

The first subroom 110 contains the first sprocket 108. The first subroom 110 extends in a direction perpendicular to a direct line that connects the shaft center of the crankshaft 56 with the shaft center of the camshaft 142 as viewed in a direction of the axis of the crankshaft 56, i.e. in a direction perpendicular to the paper in FIG. 2 (top-to-bottom direction). In other words, the first subroom 110 extends in a direction perpendicular to a plane containing the crankshaft 56 and camshaft 142. The first subroom 110 is surrounded by a first wall 184, second wall 186, third wall 188 and fourth wall 190. A bearing 182 is attached to the first wall 184 for supporting the first crankshaft portion 98. The second wall 186 is located to the right of the driving pulley 50. The third wall 188 connects the first wall 184 with the second wall 186. The fourth wall 190 has a first opening 112 exposing the first subroom 110. The fourth wall 190 is located forward of the first subroom 110. The second wall 186 is connected with the third wall 188 and fourth wall 190 by means of a bolt 192.

The second subroom 138 is formed within the cylindrical portion 194 of the cylinder body 126. A second opening 136 in alignment with the first opening 112 is formed on one end of the cylindrical portion 194. A third opening 140 exposing the second subroom 138 is formed on the other end of the cylindrical portion 194. The first and second subrooms 110 and 138 are connected with each other via the first and second openings 112 and 136. In other words, the first subroom 110 is connected with the second subroom 138 via one end of the cylindrical portion 194. The second subroom 138 is located to the left of the cylinder bore 132. The second subroom 138 has a rectangular cross section. The second subroom 138 is surrounded by the wall 196 of the cylindrical portion 194. The cylindrical portion 194 is only open at the one end and the other end. That is, the cylindrical portion 194 is only in communication with the outside of the second subroom 138 at the one end and the other end.

The third subroom 148 contains the second sprocket attached to an end of the camshaft 142. A fourth opening 144 in alignment with the third opening 140 is formed at a rear portion of the cylinder head 128. The second and third subrooms 138 and 148 are connected with each other via the third and fourth openings 140 and 144. That is, the third subroom 148 is connected with the second subroom 138 via the other end of the cylindrical portion 194.

The first sprocket 108 is attached to the first crankshaft portion 98. The first sprocket 108 is adjacent the first crank web 94. The first sprocket 108 is shaped like a disk.

The second sprocket 146 is shaped like a disk with a diameter greater than that of the first sprocket 108. The second sprocket 146 is attached to an end of the camshaft 142 by means of a bolt.

The cam chain 154 transmits power from the first sprocket 108 to the second sprocket 146. The cam chain 154 is wound around the first and second sprockets 108 and 146. The cam chain 154 is disposed in, and runs through, the first subroom 110, second subroom 138 and third subroom 148. In the present embodiment, the cam chain 154 is a silent chain.

The chain guide 156 guides the cam chain 154. The chain guide 156 is disposed in, and extends through, the first subroom 110, second subroom 138 and third subroom 148. The chain guide 156 is supported by a first guide support 160 contained in the crankcase 84 and a second guide support 162 attached to the cylinder body 126. The second guide support 162 is provided on the chain guide 156. The chain guide 156 may be fabricated by bending a plate and baking rubber onto the bent plate. The chain guide 156 extends from the first subroom 110 toward the third subroom 148. In other words, the chain guide 156 extends in a front-to-rear direction. The chain guide 156 extends in a front-to-rear direction such that one end thereof is in the vicinity of the camshaft 142, which defines the center of rotation of the second sprocket 146. The chain guide 156 extends such that the other end thereof is in the vicinity of the crankshaft 56, which defines the center of rotation of the first sprocket 108.

The tensioner 158 tensions the cam chain 154. The tensioner 158 is disposed in, and extends through, the first subroom 110, second subroom 138 and third subroom 148. More particularly, the tensioner 158 is disposed between the cam chain 154 and a sidewall of the crankcase 84, between the cam chain 154 and a sidewall of the cylinder body and between the cam chain 154 and a sidewall of the cylinder head 128. The tensioner 158 can be bent like a bow. In other words, the tensioner 158 can be curved in an arc. The tensioner 158 includes a bolt 164, leaf spring 166 and blade shoe 168. The tensioner 158 is swingable as viewed in a direction of the axis of the crankshaft 56. More particularly, the tensioner 158 is swingable in the direction of arrow R in FIG. 5 between its position indicated by solid lines in FIG. 5 and its position indicated by one-dot chain lines for its rear end.

The bolt 164 serves as a fulcrum about which the tensioner 158 can swing. The bolt 164 is located parallel to the camshaft 142. The bolt 164 is located in a front end portion of the tensioner 158. The bolt 164 is fixed to the cylinder head 128. A subroom 200 in which the bolt 164 can be disposed is formed in the cylinder head 128. As shown in FIG. 6, the bolt 164 is located in the hole 260 on the cylinder head 128. A seal 165 is located in the hole 260. The seal 165 seals the gap between the cylinder head 128 and bolt 164.

The leaf spring 166 receives forces from the bolt 164, support pin 170 and cam chain 154 so as to be deformed elastically. The leaf spring 166 extends in a front-to-rear direction. The leaf spring 166 is fabricated by laminating several, in the present embodiment four, rectangular metal members. The leaf spring 166 can be bent like a bow. In other words, the leaf spring 166 can be curved in an arc. One end of the leaf spring 166 is located in the cylinder head 128. The other end of the leaf spring 166 is located in the crankcase 84.

The blade shoe 168 may be in contact with the cam chain 154 and support pin 170. The blade shoe 168 is attached to the leaf spring 166. The blade shoe 168 supports the leaf spring 166. The blade shoe 168 is made of resin. The blade shoe 168 includes a plate portion 172, swing fulcrum portion 174, metal plate support portion 176 and contact portion 178.

The plate portion 172 covers the side of the leaf spring 166 adjacent to the cam chain 154. The plate portion 172 is provided along the leaf spring 166. The width of the plate portion 172 is generally the same as that of the leaf spring 166. As used herein, "width of the leaf spring 166" means the dimension of the leaf spring measured in a direction of the axis of the crankshaft 56. In other words, "width" means a dimension in a direction perpendicular to the paper in FIG. 5, i.e. in a left-to-right direction in FIG. 6. The plate portion 172 extends in a direction in which the leaf spring 166 extends. The plate portion 172 may be in contact with the cam chain 154 between the first and second sprockets 108 and 146, as viewed in a front-to-rear direction.

The swing fulcrum portion 174 is provided at one end of the plate portion 172. A support hole 250, into which the bolt 164 can be inserted, is provided in the swing fulcrum portion 174. The swing fulcrum portion 174 is located in the vicinity of the second sprocket 146. The swing fulcrum portion 174 is located forward of a portion of the second sprocket 146 in a front-to-rear direction. The swing fulcrum portion 174 and bolt 164 are located in the subroom 200, which is defined by the wall of the cylinder head 128 located to the right of the third subroom 148 in FIG. 4, and the cam chain 154. The bolt 164 is inserted into the support hole 250 in the swing fulcrum portion 174 and the tensioner 158 is swingably supported on the cylinder head 128. Thus, the tensioner 158 is swingable around the swing fulcrum portion 174 and may be curved as it is supported by the swing fulcrum portion 174, cam chain 154 and support pin 170.

The metal plate support portion 176 supports the leaf spring 166 by sandwiching the leaf spring 166 with the plate portion 172. The metal plate support portion 176 extends from the swing fulcrum portion 174 along the leaf spring 166.

The contact portion 178 is provided at the other end (rear end) of the leaf spring 166. The contact portion 178 is in contact with the side of the leaf spring 166 opposite the side adjacent to the cam chain 154. The contact portion 178 supports the leaf spring 166 by sandwiching the leaf spring 166 with the plate portion 172. The contact portion 178 may contact the support pin 170. The contact portion 178 is located in the vicinity of the first sprocket 108. The contact portion 178 is located rearward of a portion of the first sprocket 108 as measured in a front-to-rear direction.

The support pin 170 is provided in the crankcase 84. The support pin 170 is positioned parallel to the crankshaft 56. The support pin 170 is in contact with a front portion of the contact portion 178. The support pin 170 is in contact with the contact portion 178 to support the tensioner 158. The support pin 170 supports the side of the tensioner 158 opposite the side in contact with the cam chain 154. The support pin 170 is cylindrical. The cylindrical portion of the support pin 170 is in contact with the tensioner 158. The support pin 170 supports the tensioner 158 in such a way that the contact portion 178 can slide relative to the pin. Surface treatment has been performed on a portion of the support pin 170, at least a portion that may contact the contact portion 178, such that the portion is slick. More particularly, this portion of the support pin 170 is Teflon(Registered Trademark)-coated. The support pin 170 is made of an abrasion-resistant material, i.e. a material that has a greater hardness than the material of the blade shoe 168. In FIG. 5, a space 300 contained in the first subroom 110 is provided to the right of the support pin 170. In other words, a space 300 is provided in a direction perpendicular to a direct line connecting the shaft center of the crankshaft 56 with the shaft center of the camshaft 142, from the tensioner 158 toward the cam chain 154, as viewed in a direction of the axis of the crankshaft 56.

### <Operation>

Next, the operations through which power from the engine 44 may be transmitted to the rear wheel will be described.

First, the crankshaft 56 is rotated. Rotation of the crankshaft 56 causes rotation of the first sprocket 108 attached to the crankshaft 56. Power from the first sprocket 108 is transmitted to the second sprocket 146 via the cam chain 154. Rotation of the second sprocket 146 causes rotation of the camshaft 142. Rotation of the camshaft 142 opens the valves. At the same time with the opening of the valves, rotation of the crankshaft 56 drives the piston 86. Thus, air is taken into the combustion chamber 114. The combustion chamber 114 is supplied with fuel from the fuel supply device. Thereafter, rotation of the crankshaft 56 causes mixed air to be compressed, and the mixed air, composed of air and fuel, is ignited. Combustion of the mixed air causes the piston head 116 to move, causing rotation of the crankshaft 56, which opens the valves. Opening of the valves causes burned gas to be discharged from the combustion chamber 114 to the outside of the chamber 114. It should be noted that the crankshaft 56 is rotated by power from a cell motor, not shown, only when the engine 44 is started.

Rotation of the crankshaft 56 causes, through its power, rotation of the driving pulley 50 of the transmission 46. Power from the driving pulley 50 is transmitted to the driven pulley 52 via the V-belt 54. As the rotational rate of the driven pulley 52 increases, the clutch shoe 80 of the centrifugal clutch 48 contacts the clutch housing 78. Then, power from the centrifugal clutch 48 is transmitted to the first output shaft 70. Power transmitted to the first output shaft 70 is transmitted to the second output shaft 180 by gears, not shown, such that power is transmitted from the second output shaft 180 to the rear wheel 16.

### <Work Procedure for Attaching Cam Chain>

A work procedure for attaching the cam chain 154 during assembly or maintenance of the engine 44 will be described.

First, the cylinder body 126 is attached to the crankcase 84. The cylinder head 128 is attached to the cylinder body 126. This forms the chain room 210 including the first subroom 110, second subroom 138 and third subroom 148. At this stage, the bolt 192 for coupling the second wall 186, third wall 188 and fourth wall 190 is not yet attached. Thus, a left portion of the first subroom 110 in FIG. 4 is not covered. That is, the first subroom 110 is visible through the opening 85 shown in FIG. 5.

Then, the cam chain 154 is wound around the first sprocket 108 attached to the crankshaft 56. Next, the tensioner 158 is inserted into the first subroom 110 through the opening 85 in the crankcase 84 (see FIG. 5). The tensioner 158 is inserted into the second subroom 138 in the cylinder body 126 and the third subroom 148 in the cylinder head 128. At this time, the tensioner 158 is inserted into the second and third subrooms 138 and 148 in such a way that the swing fulcrum portion 174 defines the leading end. The hole 260 in the cylinder head 128 and the support hole 250 in the swing fulcrum portion 174 of the tensioner 158 are aligned with each other. The bolt 164 is put into the support hole 250 in the swing fulcrum portion 174 from outside the cylinder head 128. The contact portion 178 of the tensioner 158 is moved to the right, in FIG. 5, of the location where the support pin 170 is to be located (moved to the position indicated by one-dot chain lines in FIG. 5) so as not to tension the cam chain 154. Thereafter, the cam chain 154 is wound around the second sprocket 146 on the camshaft 142. After the cam chain 154 is wound around the first and second sprockets 108 and 146, the contact portion 178 of the tensioner 158 is moved toward the cam chain 154 (the position indicated by solid lines in FIG. 5), and the support pin 170 is attached.

### <Other Embodiments>

In the illustrated embodiment, a detachable support pin 170 is attached to the crankcase 84 to support the tensioner 158; however, the present invention is not limited to such a configuration. A projection may be formed at a predetermined position on the crankcase 84 to support the tensioner 158.

Although the illustrated embodiment has described a motorcycle 10 with one cylinder 88, the present invention is not limited to such a configuration and may be used in a motorcycle with several cylinders.

Although the illustrated embodiment has described a motorcycle 10 with one camshaft 142, the present invention is not limited to such a configuration and may be used in a motorcycle with two camshafts.

Although the illustrated embodiment has described a two-wheeled motorcycle, the present invention is not limited to such a configuration and may be used in a straddle type vehicle with three or four wheels.

Although the illustrated embodiment has described an engine without a head cover, the present invention is not limited to such a configuration and may be used with an engine with a head cover.

In the illustrated embodiment, the tensioner 158 is supported by a support pin 170; the shape of the support pin 170 is not limited to a cylinder or cone, and the portion of the pin that may contact the tensioner 158 may be curved.

### <Features of Embodiment>

Features of the embodiment will be described below.

In the illustrated embodiment, a bolt 164 is attached to the cylinder head 128 for swingably supporting the tensioner 158, and a contact portion 178 is located in the crankcase 84. Since the crankcase 84 defines a space that is larger than the cylinder head 128, the contact portion 178 of the tensioner 158 may be separated from the cam chain 154 while the cam chain 154 is attached. In other words, the contact portion 178 may be moved to the position indicated by broken lines in FIG. 5. Accordingly, the cam chain 154 is not tensioned while the cam chain 154 is attached to the engine 44, which means that it is relatively easy to attach the cam chain 154.

In the illustrated embodiment, the first subroom 110 in the crankcase 84 has a space 300 to the right, in FIG. 5, of the location where the support pin 170 is to be located, such that the contact portion 178 of the tensioner 158 can be easily moved.

In the illustrated embodiment, the portion of the support pin 170 that may contact the tensioner 158 is curved, thereby reducing abrasion of the support pin 170.

In the illustrated embodiment, surface treatment is performed on the support pin 170 to make it slick such that the contact portion 178 can easily slide while in contact with the support pin 170. This prevents the support pin 170 from being worn away by abrasion with the contact portion 178.

In the illustrated embodiment, the support pin 170 is made of a material that has a greater hardness than that of the blade shoe 168, thereby preventing the support pin 170 from being worn away by abrasion with the contact portion 178.

## Claims

1. An engine including a chain room (210), comprising:
a crankshaft (56);
a camshaft (142);
a first sprocket (108) attached to the crankshaft (56);
a second sprocket (146) attached to the camshaft (142);
a crankcase (84) containing the first sprocket (108);
a cylinder body (126) attached to the crankcase (84);
a cylinder head (128) attached to the cylinder body (126) and containing the second sprocket (146);
a chain (154) wound around the first sprocket (108) and the second sprocket (146);
and
a tensioning member (158) configured to tension the chain (154),
wherein the tensioning member (158) includes:
a leaf spring (166); and
a contact member (168) supporting the leaf spring (166) and contactable with the chain (154) in the chain room (210),
the crankcase (84), the cylinder body (126) and the cylinder head (128) form the chain room (210) including a first subroom (110), a second subroom (138) and a third subroom (148) containing the chain (154), the first subroom (110) is visible through an opening (85) in the crankcase (84),
the engine further includes:
a support shaft (164) inserted into a support hole (250) formed in the tensioning member (158) for swingably supporting the tensioning member (158); and
a support member (170) contactable with a supported portion (178) of the tensioning member (158) to support the tensioning member (158), and
the support member (170) is configured to support the tensioning member (158) in such a way that the supported portion (178) is slidable,
**characterized in that**
the cylinder body (126) includes a cylindrical portion forming second subroom (138) as a part of the chain room (210),
the support shaft (164) is swingably supporting the tensioning member (158) on the cylinder head (128), and
the support member (170) is provided in the crankcase (84).

2. An engine according to claim 1, **characterized in that** the tensioning member (158) is swingable as viewed in a direction of an axis of the crankshaft (56), the support member (170) is configured to support a side of the tensioning member (158) that is opposite a side contactable with the chain (154), and
the first subroom (110) has a space (300) extending from the support member (170) in a first direction, the first direction being perpendicular to a direct line connecting a shaft center of the crankshaft (56) with a shaft center of the camshaft (142) as viewed in a direction of the axis of the crankshaft (56) and opposite a direction from the tensioning member (158) toward the chain (154).

3. An engine according to claim 1 or 2, **characterized in that** the supported portion (178) supported by the support member (170) is included in the contact member (168), and
the support member (170) is made of a material having a greater hardness than that of the contact member (168).

4. An engine according to any one of claims 1 to 3, **characterized in that** the support hole (250) is formed in one end portion of the contact member (168), and
the supported portion (178) is formed at another end portion of the contact member (168).

5. An engine according to any one of claims 1 to 4, **characterized in that** at least a portion (172) of the contact member (168), between one end and another end thereof, is contactable with the chain (154).

6. An engine according to any one of claims 1 to 5, **characterized in that** a portion of the support member (170) facing the supported portion (178) is curved.

7. An engine according to any one of claims 1 to 6, **characterized in that** the support member (170) has a cylindrical portion contactable with the supported portion (178).

8. An engine according to any one of claims 1 to 7, **characterized in that** a portion of the support member (170) contactable with the tensioning member (158) is Teflon (Registered Trademark)-coated.

9. An engine according to claim 1, **characterized by** a space in which the support shaft (164) is locatable between a wall of the cylinder head (128) located in a first direction relative to the chain (154) and the chain (154), the first direction being perpendicular to a direct line connecting a shaft center of the crankshaft (56) with a shaft center of the camshaft (142) as viewed in a direction of an axis of the crankshaft (56) and opposite a direction from the tensioning member (158) toward the chain (154).

10. An engine according to any one of claims 1 to 9, **characterized in that** a hole (260) in which the support shaft (164) is locatable is formed in the cylinder head (128), and a seal (165) is located in the hole (260).

11. A straddle type vehicle including the engine according to any one of claims 1 to 10.

12. A method of attaching a chain (154) to an engine having a chain room (210) in which the chain (154) is locatable, comprising:
a first step of fitting together a crankcase (84) having a first subroom (110) for containing a first sprocket (108), a cylinder body (126) attached to the crankcase (84) and having a cylindrical portion defining a second subroom (138), and a cylinder head (128) attached to the cylinder body (126) and having a third subroom (148) capable of containing a second sprocket (146) so as to form the chain room (210) including the first subroom (110), the second subroom (138) and the third subroom (148);
a second step of winding the chain (154) around the first sprocket (108) provided on a crankshaft (56) contained in the crankcase (84);
a third step of inserting, through an opening (85) in the crankcase (84) and from the first subroom (110) into the third subroom (148), a tensioning member (158) having a leaf spring (166) and a contact member (168) attached to the leaf spring (166), and swingably attach the tensioning member (158) to the cylinder head (128);
a fourth step of attaching the chain (154) to the second sprocket (146);
a fifth step of attaching, to the camshaft (142), the second sprocket (146) around which the chain (154) is wound; and
a sixth step of moving, toward the chain (154), another end of the tensioning member (158) located in the crankcase (84), the other end of the tensioning member (158) being supported by a support member (170).

13. A method according to claim 12, wherein the third step includes the step of positioning, in the cylinder head (128), a support hole (250) formed in one end portion of the tensioning member (158) and inserting the support shaft (164) into the support hole (250) from outside the cylinder head (128).

## Patentansprüche

1. Ein Motor, der einen Ketten-Raum (210) beinhaltet, mit:
einer Kurbelwelle (56);
einer Nockenwelle (142);
einem ersten Kettenrad (108), angebracht an der Kurbelwelle (56);
einem zweiten Kettenrad (146), angebracht an der Nockenwelle (142);
einem Kurbelgehäuse (84), welches das erste Kettenrad (108) aufnimmt;
einem Zylinderkörper (126), angebracht an dem Kurbelgehäuse (84);
einem Zylinderkopf (128), angebracht an dem Zylinderkörper (126) und der das zweite Kettenrad (146) aufnimmt;
einer Kette (154), gewickelt um das erste Kettenrad (108) und das zweite Kettenrad (146); und
einem Spannelement (158), konfiguriert um die Kette (154) zu spannen, wobei das Spannelement (158) beinhaltet:
eine Blattfeder (166); und
ein Kontaktelement (168), welches die Blattfeder (166) lagert und in Kontakt mit der Kette (154) in dem Ketten-Raum (210) bringbar ist,
das Kurbelgehäuse (84), der Zylinderkörper (126) und der Zylinderkopf (128) bilden den Ketten-Raum (210), der einen ersten Unter-Raum (110), einen zweiten Unter-Raum (138) und einen dritten Unter-Raum (148) beinhaltet, welche die Kette (154) aufnehmen, der erste Unter-Raum (110) ist durch eine Öffnung (85) in dem Kurbelgehäuse (84) sichtbar,
der Motor beinhaltet weiterhin:
eine Lagerwelle (164), eingesetzt in ein Lagerloch (150), ausgebildet in dem Spannelement (158), zum schwenkbaren Lagern des Spannelements (158); und
ein Lagerelement (170), in Kontakt bringbar mit einem gelagerten Abschnitt (178) des Spannelements (158), um das Spannelement (158) zu lagern, und
das Lagerelement (170) ist konfiguriert um das Spannelement (158) in der Weise zu lagern, dass der gelagerte Abschnitt (178) gleitbar ist,
**dadurch gekennzeichnet, dass** der Zylinderkörper (126) einen zylindrischen Abschnitt beinhaltet, der den zweiten Unter-Raum (138) als Teil des Ketten-Raums (210) bildet,
die Lagerwelle (164) das Spannelement (158) an dem Zylinderkopf (128) schwenkbar lagert, und das Lagerelement (170) in dem Kurbelgehäuse (184) vorgesehen ist.

2. Ein Motor gemäß Anspruch 1, **dadurch gekennzeichnet, dass** das Spannelement (158) schwenkbar ist, wenn in einer Richtung einer Achse der Kurbelwelle (56) betrachtet,
das Lagerelement (170) ist konfiguriert um eine Seite des Schwenkelements (158) zu lagern, die gegenüberliegent einer Seite ist, die in Kontakt mit der Kette (154) bringbar ist, und
der erste Unter-Raum (110) hat einen Raum (300) der sich von dem Lagerelement (170) in eine erste Richtung erstreckt, die erste Richtung ist senkrecht zu einer direkten Linie, welche eine Wellenmitte der Kurbelwelle (56) mit einer Wellemitte der Nockenwelle (142) verbindet, wenn in eine Richtung der Achse der Kurbelwelle (56) und entgegen einer Richtung von dem Spannelement (158) zu der Kette (154) betrachtet.

3. Ein Motor gemäß Anspruch 1 oder 2, **dadurch gekennzeichnet, dass** der gelagerte Abschnitt (178), der durch das Lagerelement (170) gelagert ist, in dem Kontaktelement (168) beinhaltet ist, und
das Lagerelement (170) ist aus einem Material gemacht, das eine größere Härte hat als das des Kontaktelements (168).

4. Ein Motor gemäß irgendeinem der Ansprüche 1 bis 3, **dadurch gekennzeichnet, dass** das Lagerloch (250) an einem Endabschnitt des Kontaktelements (168) ausgebildet ist, und
der gelagerte Abschnitt (178) an dem anderen Endabschnitt des Kontaktelements (168) ausgebildet ist.

5. Ein Motor gemäß irgendeinem der Ansprüche 1 bis 4, **dadurch gekennzeichnet, dass** zumindest ein Abschnitt (172) des Kontaktelements (168), zwischen einem Ende und dem anderen Ende desselben, mit der Kette (154) in Kontakt bringbar ist.

6. Ein Motor gemäß irgendeinem der Ansprüche 1 bis 5, **dadurch gekennzeichnet, dass** ein Abschnitt des Lagerelements (170), gegenüber dem gelagerten Abschnitt (178), gekrümmt ist.

7. Ein Motor gemäß irgendeinem der Ansprüche 1 bis 6, **dadurch gekennzeichnet, dass** das Lagerelement (170) einen zylindrischen Abschnitt hat, der mit dem gelagerten Abschnitt (178) in Kontakt bringbar ist.

8. Ein Motor gemäß irgendeinem der Ansprüche 1 bis 7, **dadurch gekennzeichnet, dass** ein Abschnitt des Lagerelements (170), das in Kontakt mit dem Spannelement (158) bringbar ist, Teflon (registrierte Handelsmarke) beschichtet ist.

9. Ein Motor gemäß Anspruch 1, gekennzeichnet durch einen Raum, in dem die Lagerwelle (164) zwischen einer Wand des Zylinderkopfs (128), angeordnet in einer ersten Richtung relativ zu der Kette (154), und der Kette (154) anordenbar ist, die erste Richtung ist senkrecht zu einer direkten Linie, welche die Wellenmitte der Kurbelwelle (56) mit einer Wellenmitte der Nockenwelle (142) verbindet, wenn in eine Richtung einer Achse der Kurbelwelle (56) und entgegen einer Richtung von dem Spannelement (158) zu der Kette (154) betrachtet.

10. Ein Motor gemäß irgendeinem der Ansprüche 1 bis 9, **dadurch gekennzeichnet dass** ein Loch (260), in dem die Lagerwelle (164) anordenbar ist, in dem Zylinderkopf (128) ausgebildet ist, und eine Dichtung (165) ist in dem Loch (260) angeordnet.

11. Ein Fahrzeug vom Spreiz-Sitz-Typ, das den Motor gemäß irgendeinem der Ansprüche 1 bis 10 beinhaltet.

12. Ein Verfahren zum Anbringen einer Kette (154) an einem Motor, der einen Ketten-Raum (210) hat, in dem die Kette (154) anbringbar ist, mit:
einem ersten Schritt des Zusammenfügens eines Kurbelgehäuses (84), das einen ersten Unter-Raum (110) zum Aufnehmen eines ersten Kettenrads (108) hat, eines Zylinderkörper (126), angebracht an dem Kurbelgehäuse (84) und das einen Zylinderabschnitt hat, der eine zweiten Unter-Raum (138) definiert, und eines Zylinderkopfs (128), angebracht an dem Zylinderkörper (126) und der einen dritten Unter-Raum (148) hat, der in der Lage ist, ein zweites Kettenrad (146) aufzunehmen, sodass der Ketten-Raum (210) gebildet ist, der den ersten Unter-Raum (110), den zweiten Unter-Raum (138) und den dritten Unter-Raum (148) beinhaltet;
einem zweiten Schritt des Wickelns der Kette (154) um das erste Kettenrad (108), vorgesehen an einer Kurbelwelle (56), aufgenommen in dem Kurbelgehäuse (84);
einem dritten Schritt des Einsetzens, durch eine Öffnung (85) in dem Kurbelgehäuse (84) und von dem ersten Unter-Raum (110) in den dritten Unter-Raum (148), eines Spannelements (158), welches eine Blattfeder (166) und ein Kontaktelement (168), angebracht an der Blattfeder (166), hat, und schwenkbar Anbringen des Spannelements (158) an dem Zylinderkopf (128);
einem vierten Schritt des Anbringens der Kette (154) an dem zweiten Kettenrad (164);
einem fünften Schritt des Anbringens, an der Nockenwelle (142), des zweiten Kettenrads (164) um das die Kette (154) gewickelt ist; und
einem sechsten Schritt des Bewegens, zu der Kette (154), eines anderen Endes des Spannelements (158), angeordnet in dem Kurbelgehäuse (84), das andere Ende des Spannelements (158) ist durch ein Lagerelement (170) gelagert.

13. Ein Verfahren gemäß Anspruch 12, wobei der dritte Schritt beinhaltet den Schritt des Positionierens, in dem Zylinderkopf (128), eines Lagerlochs (250), ausgebildet an einem Endabschnitt des Spannelements (158), und Einsetzen der Lagerwelle (164) in das Lagerloch (250) von außerhalb des Zylinderkopfs (128).

## Revendications

1. Moteur comprenant une chambre de chaîne (210), comprenant :
un vilebrequin (56) ;
un arbre à cames (142) ;
un premier pignon (108) attaché au vilebrequin (56) ;
un deuxième pignon (146) attaché à l'arbre à cames (142) ;
un carter (84) contenant le premier pignon (108) ;
un corps de cylindre (126) attaché au carter (84) ;
une tête de cylindre (128) attachée au corps de cylindre (126) et contenant le deuxième pignon (146) ;
une chaîne (154) enroulée autour du premier pignon (108) et du deuxième pignon (146) ; et
un tendeur (158) configuré pour tendre la chaîne (154),
dans lequel
le tendeur (158) comprend :
un ressort à lame (166) ; et
un élément de contact (168) qui supporte le ressort à lame (166) et peut être mis en contact avec la chaîne (154) dans la chambre de chaîne (210),
le carter (84), le corps de cylindre (126) et la tête de cylindre (128) forment la chambre de chaîne (210) qui comprend une première sous-chambre (110), une deuxième sous-chambre (138) et une troisième sous-chambre (148) contenant la chaîne (154), la première sous-chambre (110) étant visible à travers une ouverture (85) dans le carter (84),
le moteur comprenant en outre :
un arbre de support (164) inséré dans un trou de support (250) formé dans le tendeur (158) pour supporter le tendeur (158) de manière pendulaire ; et
un élément de support (170) qui peut être mis en contact avec une partie supportée (178) du tendeur (158) pour supporter le tendeur (158), et
l'élément de support (170) étant configuré pour supporter le tendeur (158) de telle sorte que la partie supportée (178) peut coulisser,
caractérisé
en ce que le corps de cylindre (126) comprend une partie cylindrique formant une deuxième sous-chambre (138) qui fait partie de la chambre de chaîne (210),
en ce que l'arbre de support (164) supporte le tendeur (158) de manière pendulaire sur la tête de cylindre (128), et
en ce que l'élément de support (170) est pourvu dans le carter (84).

2. Moteur selon la revendication 1, caractérisé
en ce que le tendeur (158) peut osciller vu en direction de l'axe de vilebrequin (56),
en ce que l'élément de support (170) est configuré pour supporter un côté du tendeur (158) opposé au côté qui peut être mis en contact avec la chaîne (154), et
en ce que la première sous-chambre (110) comporte un espace (300) qui s'étend depuis l'élément de support (170) dans une première direction, la première direction étant perpendiculaire à une ligne connectant directement le centre de l'arbre du vilebrequin (56) au centre de l'arbre à cames (142) vu en direction de l'axe du vilebrequin (56) et opposée à une direction allant du tendeur (158) vers la chaîne (154).

3. Moteur selon la revendication 1 ou 2, caractérisé
en ce que la partie supportée (178) supportée par l'élément de support (170) est incluse dans l'élément de contact (168), et
en ce que l'élément de support (170) est constitué d'un matériau présentant une dureté supérieure à celle de l'élément de contact (168).

4. Moteur selon l'une quelconque des revendications 1 à 3, caractérisé
en ce que le trou de support (250) est formé dans une partie terminale de l'élément de contact (168), et
en ce que la partie supportée (178) est formée dans une partie terminale de l'élément de contact (168).

5. Moteur selon l'une quelconque des revendications 1 à 4, **caractérisé en ce qu'**au moins une partie (172) de l'élément de contact (168), entre une extrémité et une autre extrémité de celui-ci, peut être mise en contact avec la chaîne (154).

6. Moteur selon l'une quelconque des revendications 1 à 5, **caractérisé en ce qu'**une partie de l'élément de support (170) faisant face à la partie supportée (178) est incurvée.

7. Moteur selon l'une quelconque des revendications 1 à 6, **caractérisé en ce que** l'élément de support (170) comporte une partie cylindrique qui peut être mise en contact avec la partie supportée (178).

8. Moteur selon l'une quelconque des revendications 1 à 7, **caractérisé en ce qu'**une partie de l'élément de support (170) qui peut être mise en contact avec le tendeur (158) est revêtue de Téflon (marque déposée).

9. Moteur selon la revendication 1, **caractérisé par** un espace dans lequel l'arbre de support (164) peut être agencé entre une paroi de la tête de cylindre (128) située dans une première direction par rapport à la chaîne (154), et la chaîne (154), la première direction étant perpendiculaire à une ligne qui connecte directement le centre de l'arbre du vilebrequin (56) au centre de l'arbre à cames (142) vu en direction de l'axe du vilebrequin (56), et opposée à une direction allant du tendeur (158) vers la chaîne (154).

10. Moteur selon l'une quelconque des revendications 1 et 9, **caractérisé en ce qu'**un trou (260) dans lequel l'arbre de support (164) peut être agencé est formé dans la tête de cylindre (128), et **en ce qu'**un joint (165) est situé dans le trou (260).

11. Véhicule de type à enfourcher comprenant un moteur selon l'une quelconque des revendications 1 à 10.

12. Procédé de montage d'une chaîne (154) dans un moteur comportant une chambre de chaîne (210) dans laquelle la chaîne (154) peut être agencée, comprenant :
une première étape d'assemblage d'un carter (84) comportant une première sous-chambre (110) pour recevoir le premier pignon (108), un corps de cylindre (126) attaché au carter (84) et comportant une partie cylindrique qui définit une deuxième sous-chambre (138), et une tête de cylindre (128) attachée au corps de cylindre (126) et contenant une troisième sous-chambre (148) capable de recevoir un deuxième pignon (146) de manière à former la chambre de chaîne (210) comprenant la première sous-chambre (110), la deuxième sous-chambre (138) et la troisième sous-chambre (148) ;
une deuxième étape d'enroulement de la chaîne (154) autour du premier pignon (108) pourvu sur un vilebrequin (56) contenu dans le carter (84) ;
une troisième étape d'insertion, à travers une ouverture (85) dans le carter (84) et depuis la première sous-chambre (110) dans la troisième sous-chambre (148), d'un tendeur (158) comportant un ressort à lame (166) et un élément de contact (168) attaché au ressort à lame (166), et d'attachement du tendeur (158) de manière pendulaire à la tête de cylindre (128) ;
une quatrième étape d'attachement de la chaîne (154) au deuxième pignon (146) ;
une cinquième étape d'attachement, à l'arbre à cames (142), du deuxième pignon (146) autour duquel la chaîne (154) est enroulée ; et
une sixième étape de déplacement, vers la chaîne (154), d'une autre extrémité du tendeur (158) situé dans le carter (84), l'autre extrémité du tendeur (158) étant supportée par un élément de support (170).

13. Procédé selon la revendication 12, dans lequel la troisième étape comprend l'étape de positionnement, dans la tête de cylindre (128), d'un trou de support (250) formé dans une partie terminale du tendeur (158), et d'insertion de l'arbre de support (164) dans le trou de support (250) à partir de l'extérieur de la tête de cylindre (128).
